(19) Europäisches Patentamt

European Patent Office

Office européen des brevets

(11) EP 4 773 099 A1

## (12) EUROPEAN PATENT APPLICATION

(43) Date of publication:
08.07.2026 Bulletin 2026/28

(21) Application number: 26150115.9

(22) Date of filing: 02.01.2026

(51) International Patent Classification (IPC):
G06V 10/82 (2022.01)      G06T 7/70 (2017.01)
G06V 40/10 (2022.01)

(52) Cooperative Patent Classification (CPC):
G06V 40/103; G06T 7/70; G06V 10/82;
G06T 2207/30196

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 02.01.2025 US 202563741288 P

(71) Applicants:
• Meshcapade GmbH
72072 Tübingen (DE)
• Max-Planck-Gesellschaft zur Förderung der
Wissenschaften e.V.
80539 München (DE)

(72) Inventors:
• Kocabas, Muhammed
Atlanta, GA 30329 (US)

• Wang, Yufu
Philadelphia, PA 19104 (US)
• Patel, Priyanka
72076 Tuebingen (DE)
• Sun, Yu
Harbin City, 150000 (CN)
• Heron, Nicolas
New York, 11937 (US)
• Bajandas, Nathan
Munich, 80807 (US)
• Saini, Nitin
72076 Tübingen (DE)
• Cseke, Alpar
72076 Tübingen (DE)
• Black, Michael
72072 Tübingen (DE)

(74) Representative: Cameron Intellectual Property
Ltd
Moncrieff House
69 West Nile Street
Glasgow G1 2QB (GB)

## (54) SYSTEMS AND METHODS FOR ESTIMATING SUBJECT POSE AND SHAPE

(57) Systems and methods are provided for estimating subject pose and shape. In some examples, the method includes generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. In some examples, the plurality of types of prompts includes a first type of prompts having a first modality and a second type of prompts having a second modality different from the first modality.

Processed by Luminess, 75001 PARIS (FR)

EP 4 773 099 A1

**Description**

RELATED APPLICATION

This application is related to and claims priority from US Provisional Application 63/741,288, filed 01/02/2025, titled "Human Pose And Shape Estimation Using Spatial And Semantic Prompts (PROMPTHMR)" the disclosure of which is incorporated herein by reference in its entirety.

TECHNICAL FIELD

Certain embodiments of the present disclosure generally relate to human pose and shape (HPS) estimation. More specifically, some embodiments of the disclosure relate to systems and methos for estimating subject pose and shape using prompt(s).

BACKGROUND

Human pose and shape (HPS) estimation presents challenges in diverse scenarios such as crowded scenes, person-person interactions, and single-view reconstruction. In some examples, the estimation of three-dimensional (3D) human pose and shape (HPS) is classically viewed as regressing the parameters of shape and pose from pixels in an image. In some examples, methods take a tightly cropped image of a person and output the pose and shape in camera coordinates. While the accuracy of such methods has increased rapidly, they do not address the whole problem in diverse scenarios. In some examples, it is desirable for an HPS method to take an image or video containing complex human-human and human-scene interactions, return the parameters of every person in the scene, and place these people in a consistent global coordinate frame.

SUMMARY

Certain embodiments of the present disclosure generally relate to human pose and shape (HPS) estimation. More specifically, some embodiments of the disclosure relate to systems and methos for estimating subject pose and shape using prompt(s).

As recited in examples, Example 1 is a method of estimating subject pose and shape. The method includes generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

As recited in examples, Example 2 is a system that includes at least one processor, and memory storing instructions that, when executed by the at least one processor, cause the system to perform a set of operations. In some examples, the set of operations includes generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

As recited in examples, Example 3 is a non-transitory computer-readable medium storing instructions. In some examples, the instructions when executed by one or more processors, cause the one or more processors to perform a set of operations including generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

While multiple embodiments are disclosed, still other embodiments of the present disclosure will become apparent to those skilled in the art from the following detailed description, which shows and describes illustrative embodiments of the disclosure. Accordingly, the drawings and detailed description are to be regarded as illustrative in nature and not restrictive.

BRIEF DESCRIPTION OF THE DRAWINGS

FIG. 1 is a simplified block diagram illustrating an example system for estimating subject pose and shape using prompt(s), in accordance with embodiments of the subject matter of the disclosure.

FIG. 2A is a simplified block diagram illustrating an example decoder for estimating subject pose and shape using prompt(s), in accordance with embodiments of the subject matter of the disclosure.

FIG. 2B is a simplified block diagram illustrating an example cross-subject interaction module, in accordance with embodiments of the subject matter of the disclosure.

FIG. 3A is a flow diagram illustrating an example method for estimating subject pose and shape using prompt(s), in accordance with embodiments of the subject matter of the disclosure.

FIG. 3B is a flow diagram illustrating an example method of reconstructing a subject-subject interaction for estimating subject pose and shape using prompt(s), in accordance with embodiments of the subject matter of the disclosure.

FIGS. 4A and 4B are a simplified diagram illustrating an example human pose and shape (HPS) estimation method that processes images with spatial or semantic prompts, in accordance with embodiments of the subject matter of the disclosure.

FIG. 5 is a simplified diagram illustrating an example human pose and shape (HPS) estimation method that processes images with box prompts, in accordance with embodiments of the subject matter of the disclosure.

FIG. 6 is a simplified diagram illustrating an example human pose and shape (HPS) estimation method that processes images with box prompts and/or mask prompts, in accordance with embodiments of the subject matter of the disclosure.

FIG. 7 is a simplified diagram illustrating an example human pose and shape (HPS) estimation method that processes images with shape prompts, in accordance with embodiments of the subject matter of the disclosure.

FIG. 8A is a simplified diagram illustrating an example human pose and shape (HPS) estimation method to recover 3D scenes of people, in accordance with embodiments of the subject matter of the disclosure.

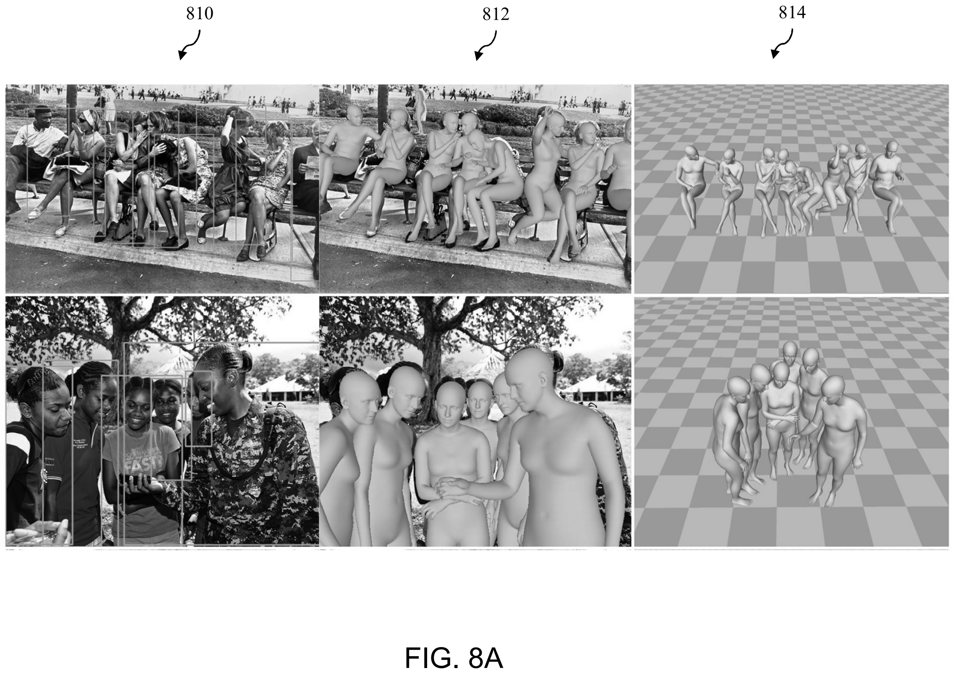

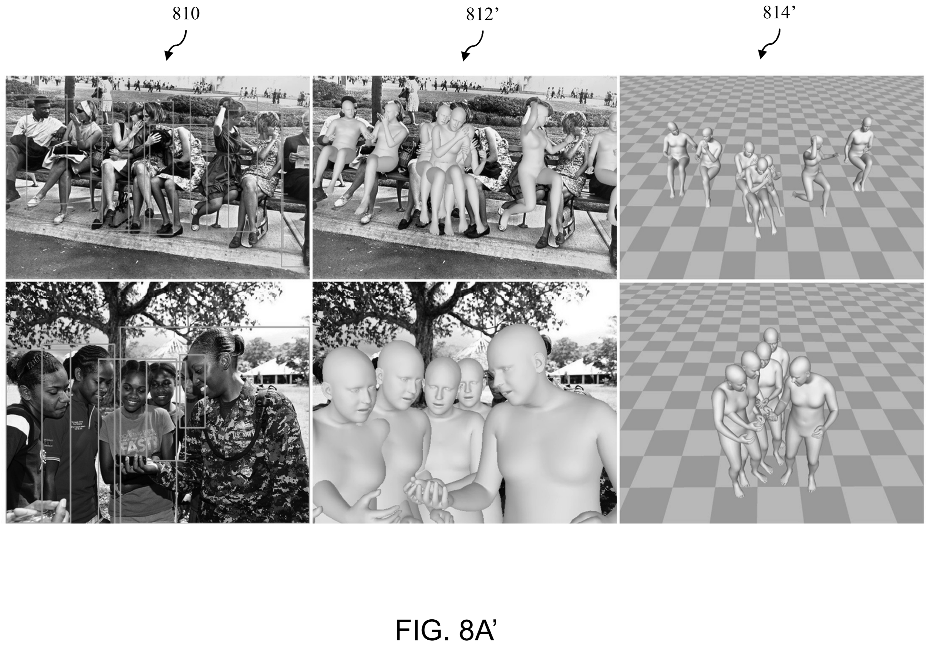

FIG. 8A' is a simplified diagram illustrating a comparative human pose and shape (HPS) estimation method to recover 3D scenes of people.

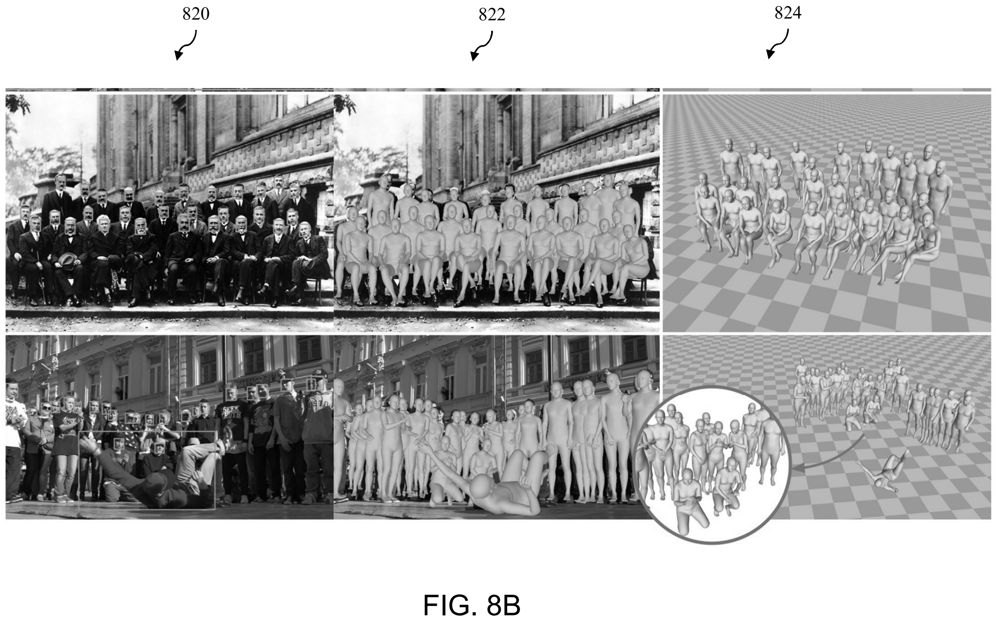

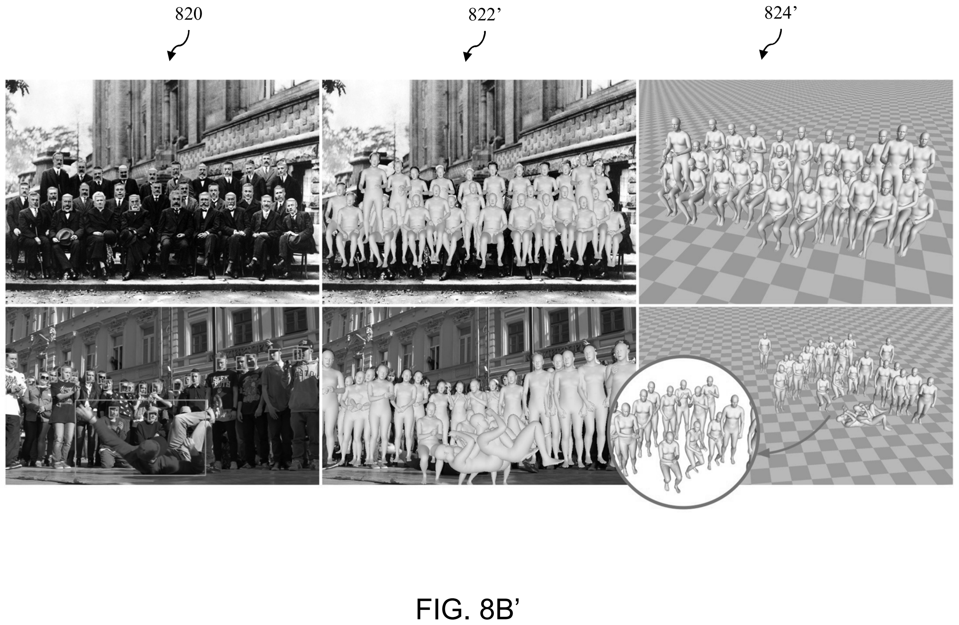

FIG. 8B is a simplified diagram illustrating an example human pose and shape (HPS) estimation method to recover 3D scenes of people, in accordance with embodiments of the subject matter of the disclosure.

FIG. 8B' is a simplified diagram illustrating a comparative human pose and shape (HPS) estimation method to recover 3D scenes of people.

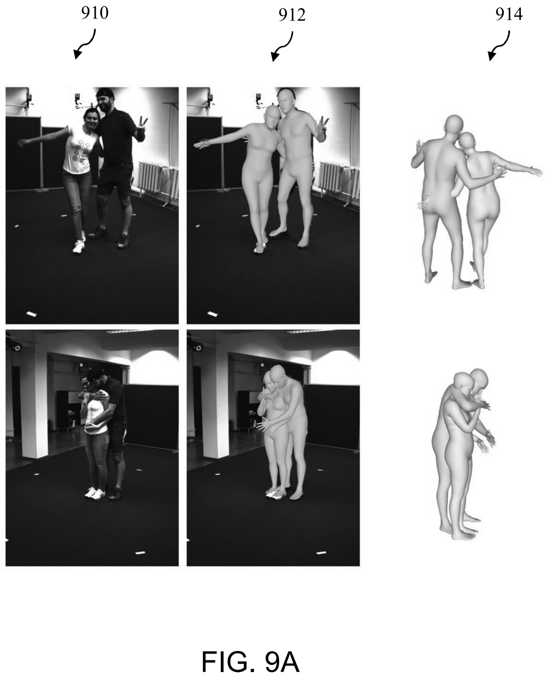

FIG. 9A is a simplified diagram illustrating an example human pose and shape (HPS) estimation method to recover two-people close interaction, in accordance with embodiments of the subject matter of the disclosure.

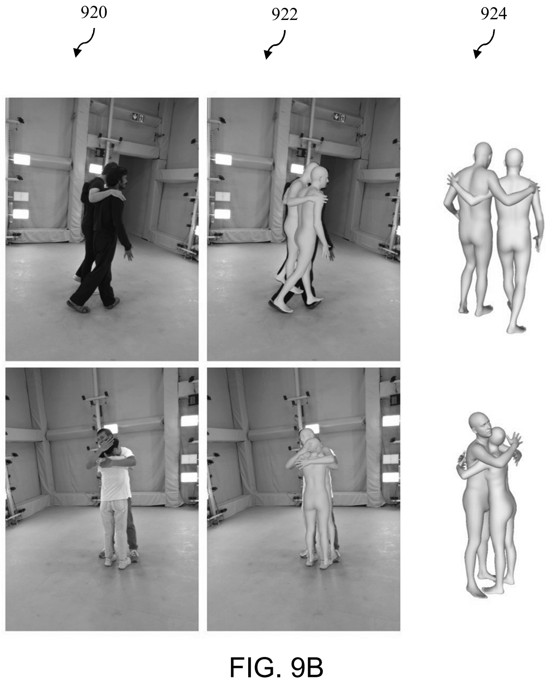

FIG. 9B is a simplified diagram illustrating an example human pose and shape (HPS) estimation method to recover two-people close interaction, in accordance with embodiments of the subject matter of the disclosure.

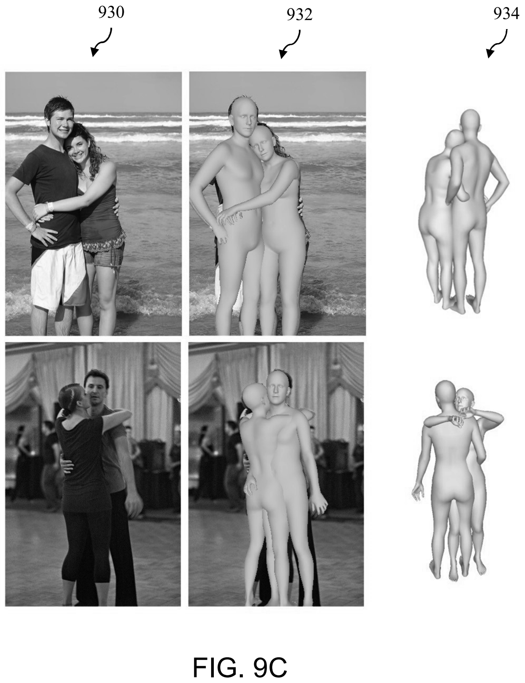

FIG. 9C is a simplified diagram illustrating an example human pose and shape (HPS) estimation method to recover two-people close interaction, in accordance with embodiments of the subject matter of the disclosure.

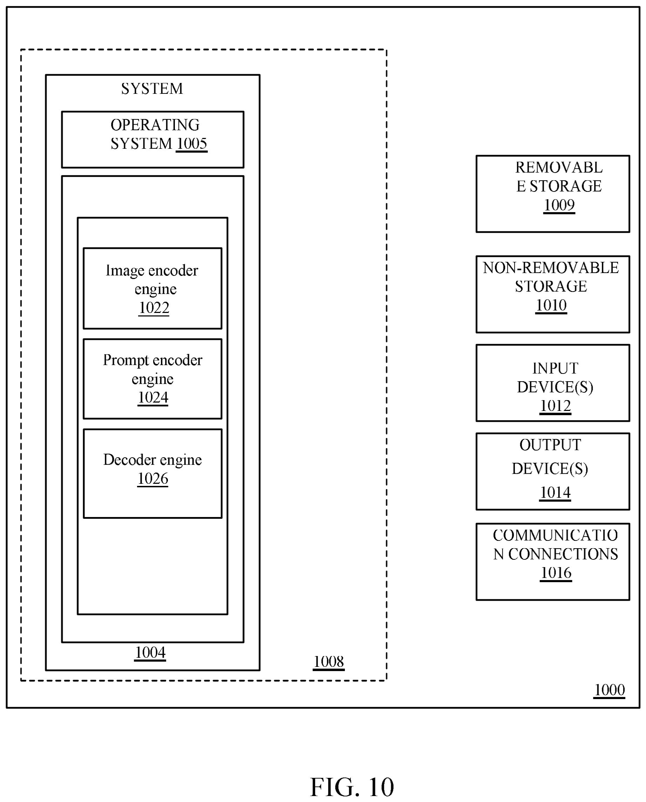

FIG. 10 is a simplified block diagram of a computing device and/or a computing system, with which aspects of the present disclosure may be practiced.

While the disclosure is amenable to various modifications and alternative forms, specific embodiments have been shown by way of example in the drawings and are described in detail below. The intention, however, is not to limit the disclosure to the particular embodiments described. On the contrary, the disclosure is intended to cover all modifications, equivalents, and alternatives falling within the scope of the disclosure as defined by the appended claims.

DETAILED DESCRIPTION

As the terms are used herein with respect to measurements (e.g., dimensions, characteristics, attributes, components, etc.), and ranges thereof, of tangible things (e.g., products, inventory, etc.) and/or intangible things (e.g., data, electronic representations of currency, accounts, information, portions of things (e.g., percentages, fractions), calculations, data models, dynamic system models, algorithms, parameters, etc.), "about" and "approximately" may be used, interchangeably, to refer to a measurement that includes the stated measurement and that also includes any measurements that are reasonably close to the stated measurement, but that may differ by a reasonably small amount such as will be understood, and readily ascertained, by individuals having ordinary skill in the relevant arts to be attributable to measurement error; differences in measurement and/or manufacturing equipment calibration; human error in reading and/or setting measurements; adjustments made to optimize performance and/or structural parameters in view of other measurements (e.g., measurements associated with other things); particular implementation scenarios; imprecise adjustment and/or manipulation of things, settings, and/or measurements by a person, a computing device, and/or a machine; system tolerances; control loops; machine-learning; foreseeable variations (e.g., statistically insignificant variations, chaotic variations, system and/or model instabilities, etc.); preferences; and/or the like.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

Existing methods for human pose and shape (HPS) estimation may be broadly classified into two principal categories. A first category utilizes a tightly cropped image of an individual as input and estimates pose and shape in camera coordinates. While effective for isolated individuals, such an approach discards scene context that is critical for resolving human pose in cases involving occlusion, severe overlap, and close interaction in multi-person scenes. A second category builds upon object detection frameworks to jointly detect humans and estimate corresponding pose and shape parameters. By operating on the entire image, these methods are capable of perceiving occluded individuals and inferring depth relationships. However, the existing methods frequently suffer from detection failures due to the inherent difficulty of simultaneously performing detection and reconstruction. In certain embodiments of the present disclosure, a promptable architecture is employed to leverage detection box prompts to resolve such conflicts while maintaining access to the entire scene context.

Existing methods for human motion estimation from video may likewise be divided into two principal categories. A first category focuses on estimating smooth human motion in camera space. These methods extend single-person HPS estimation approaches by incorporating temporal layers during the SMPL™ decoding phase to introduce temporal coherence. As described herein, SMPL™ is a model and system created by Meshcapade GmbH and refers to skinned multi-person linear model, which is a parametric 3D human body model (e.g., mesh) using a compact set of parameters, and SMPL-X is its extended version that adds expressive hands and/or facial features. More recent methods estimate human motion in world coordinates from videos captured with dynamic cameras. Such methods typically follow a two-stage approach, first estimating camera motion using simultaneous localization and mapping (SLAM) techniques, and then leveraging human motion priors to optimize human world motion. Other approaches employ temporal models to directly regress human world motion from image and camera features, while still others utilize monocular metric depth estimation to resolve the scale of camera motion and transform human motion from camera space to world coordinates.

According to certain embodiments of the present disclosure, systems and methods extend to video by processing SMPL-X output tokens with a temporal transformer module to estimate temporally stable and smooth human motion and translation in camera space. Human motion may then be transformed to world coordinates using TRAM (e.g., a framework to reconstruct the global trajectory and motion of humans in 3D from in-the-wild videos), which provides a simple and effective mechanism for such transformation. As described herein, in some examples, TRAM refers to a framework that integrates SLAM-based camera tracking with transformer-based human motion regression to produce accurate, temporally stable 3D human trajectories in world coordinates.

In some examples, methods have explored combining different types of semantic information, including language descriptions and knowledge of person-person interactions, to improve reasoning about 3D humans from images and videos. Some methods follow the approach of visual language models (VLMs) by fine-tuning a large language model (LLM) with a combination of images and tokens to estimate SMPL parameters (e.g., pose parameters $\theta$, shape parameters $\beta$, translation parameters $\tau$, etc.). Other methods employ multi-modal frameworks that align image, 3D pose, and text representations in a shared latent space. Still other methods focus on combining high-level scene reasoning with 3D HPS, or exploit detailed language descriptions of human pose. None of these existing methods achieves state-of-the-art (SOTA) accuracy on the HPS task.

In some examples, methods have been proposed to model the relationship between SMPL™ body shape and natural language descriptions, for example, language descriptions and images providing complementary information for solving the HPS task. Other approaches address the challenge of estimating person-person interactions. For example, some methods employ optimization-based techniques that leverage diffusion models as priors over interacting individuals, while other methods query a VLM to estimate contact points on the human body surface and utilize these contact points to guide optimization processes for improved human interaction.

Existing HPS methods remain limited in their understanding of 3D humans, as evidenced by relatively low 3D pose accuracy. Certain methods focus exclusively on exploring the relationship between SMPL™ body shape and natural language, while others rely on post-processing approaches for modeling interaction that do not directly reason over image information.

According to certain embodiments of the present disclosure, these limitations are addressed by training a single model capable of flexible prompting that achieves state-of-the-art (SOTA) performance not only on standard HPS benchmarks but also on benchmarks specifically tailored to body shape estimation and person-person interaction.

Conventional systems and methods for human pose and shape (HPS) estimation often have limitations. In some examples, human pose and shape (HPS) estimation presents challenges in diverse scenarios such as crowded scenes, person-person interactions, and single-view reconstruction. Existing approaches lack mechanisms to incorporate auxiliary "side information" that could enhance reconstruction accuracy in such challenging scenarios. In some examples, some existing methods rely on cropped person detections and cannot exploit scene context while methods that process the whole image often fail to detect people and are less accurate than methods that use crops. In some examples, while recent language-based methods explore HPS reasoning through large language or vision-language models, their metric accuracy is well below the state of the art.

According to certain embodiments, systems and methods of human pose and shape (HPS) estimation are provided to overcome the limitations of the conventional systems and methods for HPS estimation. In some embodiments, the present disclosure provides a transformer-based promptable method that reformulates HPS estimation through spatial and semantic prompts. In some embodiments, systems and methods described herein can process full images to maintain scene context and accept multiple input modalities including, for example, spatial prompts like bounding boxes and masks, and semantic prompts like language descriptions or interaction labels. In some embodiments, the present disclosure demonstrates robust performance across challenging scenarios such as, for example, estimating people from bounding boxes as small as faces in crowded scenes, improving body shape estimation through language descriptions, modeling person-person interactions, and producing temporally coherent motions in videos. In some examples, experiments on benchmarks show that systems and methods described herein can achieve state-of-the-art performance while offering flexible prompt-based control over the HPS estimation process.

The present disclosure acknowledges that conventional formulations of the human pose and shape (HPS) estimation problem, which rely primarily on a "pixels-to-parameters" approach, are unduly restrictive. For instance, large-scale vision-language foundation models (VLMs) are capable of extracting substantial semantic information from images, including recognition of human activities depicted therein. However, such models generally lack the capability to infer or represent three-dimensional (3D) human pose and shape with sufficient fidelity. Accordingly, there is a need to integrate VLMs with 3D HPS methodologies in order to achieve 3D accuracy that surpasses the performance of existing classical techniques.

According to certain embodiments, the present disclosure utilizes auxiliary or "side" information, such as information provided by a vision-language model (VLM), to enhance the robustness, utility, and accuracy of three-dimensional (3D) human pose and shape (HPS) regression. In particular, an effective "promptable" HPS architecture is developed. For example, in crowded scenes, conventional person detection methods often fail, whereas face detection methods remain reliable. In scenarios involving close human interaction, overlapping and occlusion of body parts introduce ambiguity in pose estimation. Furthermore, estimation of 3D body shape from monocular views is inherently difficult due to perspective ambiguity. In such cases, cues or prompts may be extracted to provide side information that assists an HPS method in analyzing the scene. Systems and methods described herein formalize this intuition by combining image evidence with spatial and semantic information originating from either human input or artificial intelligence systems such as VLMs.

In certain embodiments, the disclosed approach integrates three principal components: (1) a vision transformer configured to extract features from high-resolution, full images to preserve scene context; (2) a multimodal prompt encoder configured to process spatial and semantic inputs; and (3) a transformer decoder configured to attend to both prompt tokens and image tokens to generate SMPL-X body parameters. This architecture addresses limitations of cropped-image HPS methods by processing full images with side information in the form of prompts. It further addresses challenges faced by full-image HPS methods in detecting all persons in a scene by accepting readily available bounding boxes. Additionally, auxiliary semantic information may be incorporated through textual descriptions or interaction labels.

In some embodiments, by combining spatial and semantic prompting, the systems and methods disclosed herein provide a versatile and powerful approach to 3D HPS estimation from full images. In some examples, a promptable architecture disclosed herein: (1) accepts bounding boxes or segmentation masks to recover full-body HPS in a robust manner; (2) improves body shape predictions by utilizing textual descriptions as input; (3) models close person-person interactions directly within the regression process; and/or (4) leverages full image context to reconstruct individuals coherently in both camera space and world space. In certain embodiments, video data is processed by incorporating temporal transformer layers at the SMPL-X decoding stage, thereby yielding temporally stable and smooth motion predictions. Furthermore, following TRAM, the temporal version of the model may be combined with metric SLAM to estimate human motion in world coordinates.

In some embodiments, to achieve robustness with respect to varying spatial inputs, a computing model disclosed herein can be trained using simulated noisy full-body and/or face-region bounding boxes. In some examples, for improved body shape estimation, a computer vision framework (e.g., SHAPY for accurate 3D human body shape regression using metric and semantic attributes) can be employed to generate automatic body shape descriptions for training samples, which are processed using a pretrained text encoder. SHAPY refers to a 3D body shape regression with semantic attributes developed by Max-Planck Gesellschaft zur Forderung der Wissenschaften e.V. In some embodiments, to enhance reconstruction of person-person interactions, segmentation masks are utilized as precise spatial prompts, and person-person attention layers are developed to operate between prompted individuals, thereby producing coherent reconstructions of close interactions. In some embodiments, through random masking of different input types during training, the model learns to operate with any combination of prompts at test time.

In some examples, qualitative or quantitative experiments conducted on benchmark datasets including EMDB, 3DPW, RICH, Hi4D, CHI3D, and HBW demonstrate that the disclosed systems and methods outperform state-of-the-art (SOTA) approaches and strong baselines. In some examples, qualitative examples using in-the-wild images and videos further illustrate the robustness and generalization capabilities of the disclosed systems and methods.

By departing from the conventional "pixels-to-parameters" formulation, the present disclosure achieves new state-of-the-art performance and demonstrates an effective mechanism for improving both accuracy and robustness by leveraging readily available side information. This approach may be conceptualized as a collaboration between VLMs, which provide semantic understanding of people in images but lack 3D representation capabilities, and a metric regressor, which provides accurate 3D human modeling but lacks semantic contextualization. The disclosed combination yields significant potential to improve generality and accuracy in 3D HPS estimation.

According to some embodiments, systems and methods for human pose and shape (HPS) estimation described herein can be provided by implementing one or more computing models. In certain embodiments, a model, also referred to as a computing model, includes a model to process data. A model includes, for example, an artificial intelligence (AI) model, a machine learning (ML) model, a deep learning (DL) model, an image processing model, an algorithm, a rule, other computing models, and/or a combination thereof.

In some embodiments, a generative AI (artificial intelligence) model includes training data embedded in the model. In certain embodiments, a generative AI model is a type of AI model that can be used to produce various type of content, such as text, images, videos, audio, 3D (three-dimensional) data, 3D models, and/or the like. In some embodiments, a language model or a large language model (LLM), which is a type of generative AI models.

In some embodiments, a machine learning (ML) model is a language model ("LM") that may include an algorithm, rule, model, and/or other programmatic instructions that can predict the probability of a sequence of words. In some embodiments, a language model may, given a starting text string (e.g., one or more words), predict the next word in the sequence. In certain embodiments, a language model may calculate the probability of different word combinations based on the patterns learned during training (based on a set of text data from books, articles, websites, audio files, etc.). In some embodiments, a language model may generate many combinations of one or more next words (and/or sentences) that are coherent and contextually relevant. In certain embodiments, a language model can be an advanced artificial intelligence algorithm that has been trained to understand, generate, and manipulate language. In some embodiments, a language model can be useful for natural language processing, including receiving natural language prompts and providing natural language responses based on the text on which the model is trained. In certain embodiments, a language model may include an n-gram, exponential, positional, neural network, and/or other type of model.

In certain embodiments, the machine learning model is a large language model (LLM), which was trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representation from transformers (BERT) model, a pathways language model (PaLM) 2, and/or the like. A prompt can be provided for processing by the LLM, which thus generates a response, a recommendation, or a piece of content accordingly.

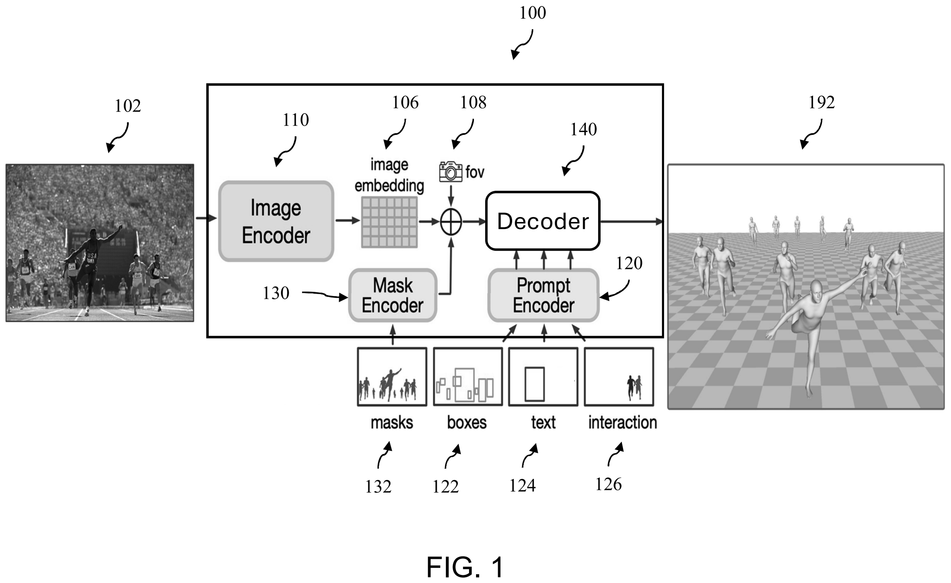

FIG. 1 is a simplified block diagram illustrating an example system 100 for estimating subject pose and shape using prompt(s), in accordance with embodiments of the subject matter of the disclosure. According to certain embodiments, the system 100 includes an image encoder 110, a prompt encoder 120, a mask encoder 130, and a decoder 140.

In some embodiments, the system 100 estimates a set of subject parameters (e.g., a set of SMPL-X parameters) for each subject of interest (e.g., person) in an input image 102 based on various types of prompts such as, for examples, boxes, language descriptions, person-person interaction cues, and the like. The system 100 can reconstruct the subject pose and shape in a three-dimensional space 192 based on the set of subject parameters. In some embodiments, given an input image and prompts, the system 100 utilizes the image encoder 110 (e.g., a vision transformer) to generate image embeddings 106, and utilizes the mask encoder 130 and the prompt encoder 120 to map different types of prompts to tokens. In some embodiments, optionally, camera intrinsics 108 can be embedded along with the image embeddings 106. The image embeddings and prompt tokens are then fed to the decoder 140. In some embodiments, the decoder 140 can be an SMPL-X decoder which is a transformer-based module that attends to both the image and prompt tokens to estimate SMPL-X parameters. In some embodiments, text prompt 124 and/or interaction prompt 126 are optional. In some embodiments, the text prompt 124 and/or the interaction prompt 126 are used to enhance the accuracy of the estimated parameters (e.g., SMPL-X parameters).

In some embodiments, the system 100 utilizes an approach of promptable mesh regression. In some examples, SMPL-X model is adopted to represent each person *i* in the 3D space, including, for example, the orientation $\phi_i \in R^3$, local body pose $\theta i \in R^{22\times3}$, shape $\beta i \in R^{10}$, and translation $\tau i \in R^3$ in the camera space. In some examples, face and/or hand parameters are not considered. In some embodiments, each human *Hi* is mapped to a 3D mesh with the differentiable SMPL-X layer as represented by:

$$Hi = \{\phi i,\ \theta i,\ \beta i,\ \tau i\} \ \ldots\ldots\ \text{Equation (1)}$$

In some embodiments, each person in the image can be prompted with spatial and semantic prompts. In some examples, spatial prompts include a bounding box $bi \in R^{2\times2}$ (the two corners) and a segmentation mask $mi \in R^{h\times w}$. In some examples, semantic prompts include text and two-person interaction labels. In some examples, a text prompt can be a CLIP embedding $ti$ of a sentence describing the body shape. In some examples, an interaction prompt can be a binary variable $ki$ indicating whether two people are in close contact. In some embodiments, semantic prompts are optional. In some embodiments, each human needs at least one spatial prompt to be reconstructed. Overall, the input prompts are represented as a prompt set Pi for person i:

$$Pi \subseteq \{bi,\ mi,\ ti,\ ki\};\ bi \in Pi\ \text{or}\ mi \in Pi\ \ldots\ldots\ \text{Equation (2)}$$

where $bi$ refers to bounding box(es), $mi$ refers to segmentation mask(s), $ti$ refers to text embedding(s) (e.g., CLIP), and $ki$ refers to interaction label(s).

In certain embodiments, promptable human mesh recovery can be defined as a learnable function that maps an image and a set of prompts to a set of 3D humans in a 3D space. This task definition integrates all available contexts to locate and reconstruct prompted humans in the image. In some embodiments, the learnable function can be represented by:

$$f : (I, \{P_i\}_{i=1}^{N}) \to \{H_i\}_{i=1}^{N} \ \ldots\ldots\ \text{Equation (3)}$$

where the input includes an image I, and a set of prompts P={P1,P2,...,PN}, one prompt set per person; the output includes a set of 3D humans reconstructed in 3D space H={$H_1$, $H_2$,..., $H_N$}.

In some embodiments, the image encoder 110 is configured to generate a structured representation 106 for the input image 102. In some embodiments, the input image 102 can be first encoded as tokens by a vision transformer (ViT) encoder as represented by:

$$F = \text{Encoder}(I) \ \ldots\ldots\ \text{Equation (4)}$$

In some examples, to ensure sufficient resolution for modeling subjects (e.g., humans) at both near and far distances, relatively high-resolution images (e.g., 896 × 896) can be used. In some embodiments, the input image 102 is an image frame from a video including a plurality of image frames. The image encoder 110 is run once per frame regardless of the number of people prompted.

In some embodiments, when camera intrinsics 108 are provided, positional encoding of the camera rays can be added to the image tokens to make them camera-aware.

In some embodiments, the prompt encoder 120 is configured to map a plurality of types of prompts associated with the image to a plurality of prompt tokens. In some embodiments, the prompt encoder 120 includes a set of transformations that map different types of prompts to token vectors of the same dimension. In some examples, when a prompt is not available, it is replaced with a learned null token.

In some embodiments, the plurality of types of prompts includes a box prompt 122. In some embodiments, the prompt encoder 120 can encode bounding boxes using positional encoding summed with learned embeddings to form box prompt tokens as represented by, e.g., $T_{bi} = \text{PE}(b_i)$, with $T_{bi} \in R^{2\times d}$. In some embodiments, different box transformations can be used during training to allow the system 100 to use different boxes as a human identifier. In some embodiments, in a training phase, each instance in an image can be prompted with a whole-body bounding box, a face bounding box, or a truncated box covering part of the body. In some embodiments, Gaussian noise can be added to both corners. In some embodiments, at inference time, the system 100 accepts boxes without needing to know the box types.

In some embodiments, the plurality of types of prompts includes a text prompt 124. Language is a natural way to supply semantic information. The text prompt 124 uses language to supplement spatial prompts with information, e.g., on body shape. In some examples, a sentence such as "a muscular and tall male" is encoded with a CLIP text encoder represented by, e.g., $T_{ti}$ = CLIP($t_i$), with $T_{ti} \in R^d$. In some embodiments, to generate paired (image, text) data, a shape-to-attribute method (e.g., SHAPY) can be used on the ground truth shape parameters to obtain shape attribute scores and randomly pick a subset of top attributes to form a sentence.

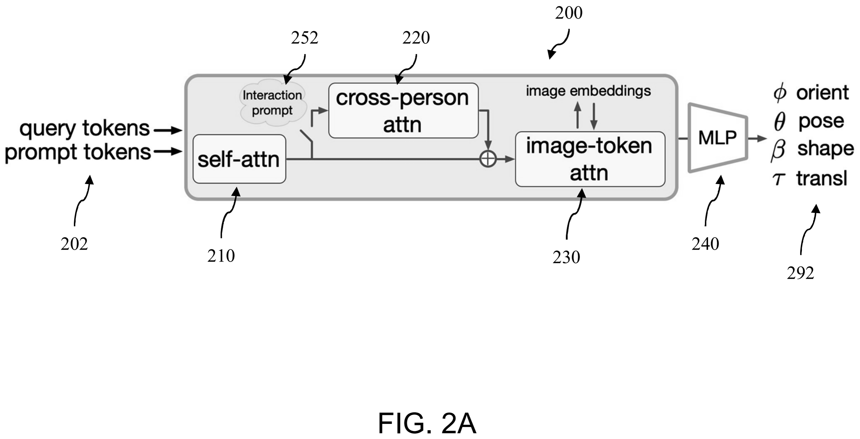

In some embodiments, the plurality of types of prompts includes an interaction prompt 126. In some embodiments, the interaction prompt 126 passes through a prompt encoder without modification and directly switches on-off the cross-person attention that is described further below for FIG. 2A.

In some embodiments, a mask encoder 130 is configured to generate spatial prompts based on masks 132 (e.g., segmentation masks). In some embodiments, the masks 132 are first processed by an encoder (e.g., a neural network including strided convolutional layers) that down-sample the masks. In some embodiments, the output mask features from the mask encoder 130 are added to the image tokens. In some examples, when no mask is provided, a learned "no mask" token is added instead. In some examples, a mask encoder can be represented by:

$$F\_i = Encoder\_m(m\_i) + F \dots\dots \text{Equation (5)}$$

where m_i is a mask input, Encoder_m is a mask encoder, F represents image features, and F_i represents the combined features.

In some embodiments, the decoder 140 is configured to estimate a set of subject parameters based at least in part on the structured representation 106 and the plurality of prompt tokens from the prompt encoder 120. In some embodiments, the decoder 140 can be a transformer decoder. In some embodiments, the decoder 140 appends two query tokens T_smpl, T_depth with the prompt tokens (e.g., box prompt tokens T_bi, text prompt tokens T_ti ,etc.) to form the person-specific prompt (T_i) which include a set of combined tokens to represent one person. In some examples, the person specific prompt can be mathematically represented by, e.g., $T_i \in R^{5 \times d}$, indicating a set of five tokens, each with dimension d.

In some embodiments, the decoder 140 can process the image features (e.g., F_i) along with the person-specific prompt (e.g., T_i). In some embodiments, the decoder 140 includes a transformer decoder and two multi-layer perceptron (MLP) heads (e.g., Headsmpl, Headdepth) to produce the final output as represented by, e.g., T_smpl', T_depth' = Decoder(Fi, Ti);

$$\phi i, \theta i, \beta i = Head\_smpl (Tsmpl'); \tau i = Head\_depth (Tdepth') \dots\dots \text{Equation (6)}$$

where T_smpl' is an input to a first MLP head Head_smpl to produce a first set of parameters (e.g., SMPL-X parameters); T_depth' is an input to a second MLP head Head_depth to produce a translation parameter (e.g., a person's position in a 3D space).

In some embodiments, a transformer decoder includes one or more (e.g., three) attention blocks. In some examples, each attention block applies self-attention on input tokens (e.g., person-specific prompts or tokens), cross-person attention (e.g., to compare tokens from different people in the scene to understand interactions), and then two-way cross-attention between the tokens and the image embeddings. In some examples, the self-attention and cross-attention with the image are applied to each prompted person in an image independently. In some embodiments, the decoder 140 uses separate tokens T_smpl (e.g., associated with 3D body pose and/or shape) and T_depth (e.g., associated with person's location or translation) to make the location representation invariant to the 3D human pose and shape representation.

In some embodiments, regressing the location of the human in the camera space can be much more challenging than most prior work that models humans in a cropped image space. In some embodiments, instead of regressing $\tau$ directly, a method is used to regress focal length normalized 2D translation $p_{xy} \in R^2$ and inverse depth $p_z \in R$, and then transform them to $\tau$ as follows

$$t_{xy} = \frac{p_{xy}}{p_z} \quad t_z = \frac{1}{p_z} \times \frac{f}{f_c} \quad \tau = [t_{xy}, tz] \quad \dots\dots \text{Equation (7)}$$

where $f$ is the ground truth or estimated focal length of the image, and $f_c$ is the canonical focal length. In some examples, predicting the normalized inverse depth follows monocular depth algorithms and is also intuitive since the inverse depth is linearly related to the size of the human in the image. In some examples, predicting $p_{xy}$ is equivalent to predicting the 2D location of the human in a normalized image plane.

FIG. 2A is a simplified block diagram illustrating an example attention block of a decoder 200 (e.g., the decoder 140 in FIG. 1) for estimating subject pose and shape using prompt(s), in accordance with embodiments of the subject matter of the disclosure. In some embodiments, the attention block of the decoder 200 includes a self-attention module 210, a cross-person interaction module 220, and an image-token attention module 230. Person-specific prompts 202, e.g., combined tokens (e.g., query tokens and prompt tokens) are provided to the decoder 200. A MLP head 240 is coupled to the decoder 200 to produce a set of parameters 292 (e.g., orientation, local body pose, shape, translation, etc., in a camera space).

In some embodiments, one or more promptable attention layers can be included in the decoder 200 to model two-person interaction. While examples are described where there are two people in the image, it is to be understood that the implementation can extend to model an interacting pair in a larger group including more than two people.

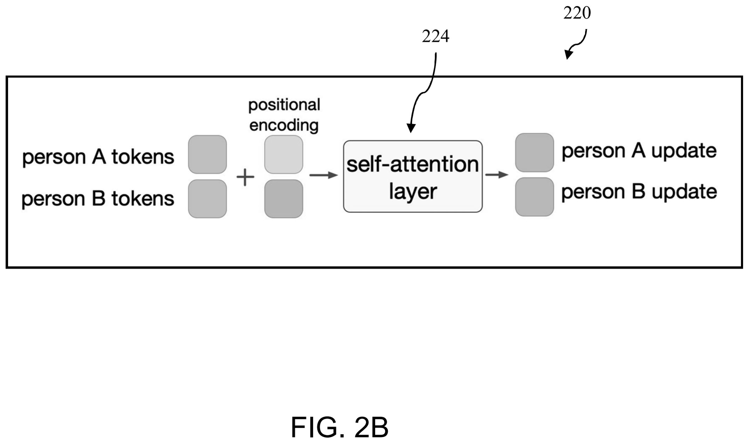

In some embodiments, the promptability is modeled as a flow control with a residual connection in FIG. 2A. The cross-person interaction module 220 can be turned on/off. FIG. 2B is a simplified block diagram illustrating an example cross-person interaction module 220 of the decoder 200, in accordance with embodiments of the subject matter of the disclosure. In some examples, when two humans are interacting (as indicated by interaction prompt 252), their query tokens pass through an additional self-attention layer 224 in FIG. 2B. Otherwise, non-interacting humans skip this.

As shown in FIG. 2B, in some embodiments, respective positional encodings associated with different individuals can be added to the respective query tokens to distinguish between the individuals (e.g., person A and person B). In some examples, the respective positional encodings can be associated with the bounding box prompts of the respective individuals. In some embodiments, the encoded tokens are processed by the self-attention layer 224 and the resulting output is combined with the original tokens through a residual connection, e.g., to update and/or refine each person's query tokens. In some embodiments, including these interaction layers can significantly improve inter-person pose accuracy in two-person interaction benchmarks.

In some examples, applying attention to every person often creates unnecessary dependency in crowded scenes, and there is limited training data for large-group scenarios. In some examples, there is high-quality data featuring two-person social interactions. By making the interaction layers promptable, the system and method described herein can mitigate data diversity issues and increase flexibility, regardless of the number of people in the scene.

In some embodiments, the interaction layer uses a standard self-attention mechanism. Self-attention is a mechanism used in AI that allows a model to weigh the importance of different parts of a single input sequence, like words in a sentence, to better understand their relationships and context. In some examples, positional encodings can be added to the query tokens to distinguish the two individuals. In some embodiments, the encoded tokens then go through a self-attention layer, whose output is combined with the original tokens via a residual connection. In some embodiments, experiments, to be described further below, demonstrate that including these interaction layers significantly improves inter-person pose accuracy in two-person interaction benchmarks.

In some embodiments, the system 100 can be trained to process videos to estimate human motion in world coordinates. In some embodiments, a simple and efficient temporal transformer module can be introduced for processing videos. Given a monocular video sequence $\{I^t\}_{t=0}^{T}$, the system 100 can be operated to obtain per-subject SMPL-X decoder output tokens Tsmpl' and Tdepth', assuming that the subject identities are provided with the prompts. These tokens, along with the positional encoding of time t, are fed to a decoder-only temporal transformer module with multiple (e.g., twelve) attention blocks. The output tokens are converted to SMPL-X parameters $\phi t$, $\theta t$, $\beta t$, translation $\tau t$, and/or joint contact probabilities ct. The contact probabilities indicate whether a given joint is in contact with the ground plane.

In certain embodiments, to obtain motion results expressed in world coordinates, system 100 may adopt the TRAM approach. In particular, DROID-SLAM together with a monocular metric depth estimation model, such as ZoeDepth, may be employed to estimate camera motion in metric world coordinates. The translation parameters may then be transformed into world coordinates based on the estimated camera motion. To further refine the human trajectory and reduce artifacts such as foot-skating, the system may utilize the estimated joint contact probabilities and perform a post-processing operation that constrains the contact joints to exhibit zero velocity.

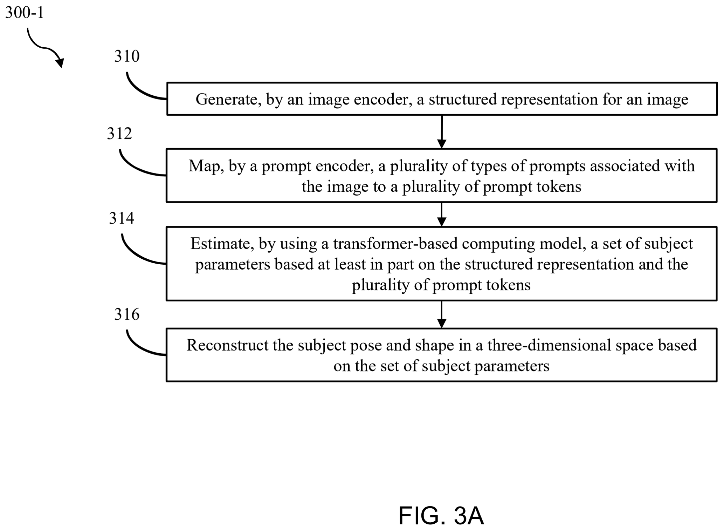

FIG. 3A is a flow diagram illustrating an example method 300-1 for estimating subject pose and shape using prompt(s), in accordance with embodiments of the subject matter of the disclosure. The method 300-1 includes processes 310, 312, 314, and 316. Although the above has been shown using a selected group of processes for the method 300-1, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the method 300-1 are performed by a system (e.g., the system 1000 in FIG. 10). In certain examples, some or all processes (e.g., steps) of the method 300-1 are performed by a computer and/or one or more processors directed by one or more pieces of software code. In some examples, some or all processes (e.g., steps) of the method 300-1 are performed according to instructions included by a non-transitory computer-readable medium (e.g., in a computer program product, such as a computer-readable flash drive). For example, a non-transitory computer-readable medium is readable by a computer.

According to some embodiments, at process 310, the system (e.g., the system 1000 in FIG. 10) generates, by an image encoder, a structured representation for an image. In certain embodiments, the image encoder includes a vision transformer configured to generate a set of image embeddings as the structured representation of the image.

According to some embodiments, at process 312, the system (e.g., the system 1000 in FIG. 10) maps, by a prompt encoder, a plurality of types of prompts associated with image to a plurality of prompt tokens. In some embodiments, the plurality of types of prompts includes a first type of prompts having a first modality and a second type of prompts having a second modality different from the first modality. In some embodiments, the one or more spatial prompts include a box prompt. the box prompt includes a face or body bounding box. In some embodiments, the one or more semantic prompts include a text prompt indicative of a subject shape in the image. In some embodiments, the one or more semantic prompts include an interaction prompt indicative of a subject-subject interaction in the image.

In some embodiments, the prompt encoder includes a first transformation to map the first type of prompts to a first set of prompt tokens, and a second transformation to map the second type of prompts to a second set of prompt tokens. In some embodiments, the first set of prompt tokens includes one or more spatial prompt tokens, and the second set of prompt tokens include one or more text tokens.

According to some embodiments, at process 314, the system (e.g., the system 1000 in FIG. 10) estimates, by using a transformer-based computing model, a set of subject parameters based at least in part on the structured representation and the plurality of prompt tokens. In some embodiments, the transformer-based computing model includes a transformer decoder. In some embodiments, the transformer decoder applies self-attention and cross-attention to each subject in the image to reconstruct each subject's pose and shape independently. In some embodiments, the transformer decoder applies cross-subject attention to reconstruct a subject-subject interaction.

In some embodiments, the set of subject parameters include an orientation parameter, a subject pose parameter, a subject shape parameter, and a translation parameter. In some embodiments, the system generates a plurality of combined tokens by appending one or more query tokens to the plurality of prompt tokens. In some embodiments, the one or more query tokens includes a first query token configured to predict a subject's pose and shape, and a second query token configured to predict a subject's position in a three-dimensional space.

In certain embodiments, the system determines that a first subject and a second subject in the image interact with each other based on an interaction prompt of the one or more semantic prompts. In some embodiments, the system adds a first positional encoding to a first query token for the first subject in the image, and adds a second positional encoding to a second query token for the second subject in the image.

According to some embodiments, at process 316, the system (e.g., the system 1000 in FIG. 10) reconstructs the subject pose and shape in a three-dimensional space based on the set of subject parameters.

In certain embodiments, the image is an image frame from a video comprising a plurality of image frames. In some embodiments, for each frame of the plurality of image frames, the system estimates a contact probability indicative of whether a given joint is in contact with a ground plane for a subject. In some embodiments, the system estimates a subject motion over time based on the set of subject parameters and the contact probability.

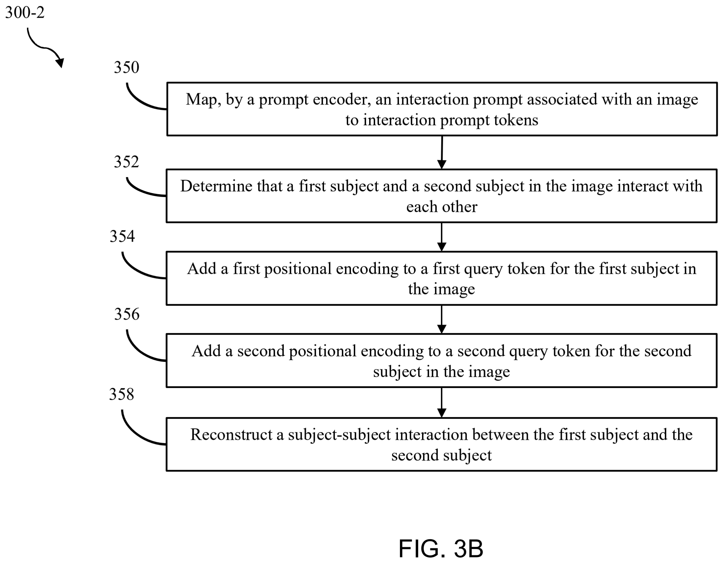

FIG. 3B is a flow diagram illustrating an example method 300-2 of reconstruct a subject-subject interaction for estimating subject pose and shape using prompt(s), in accordance with embodiments of the subject matter of the disclosure. The method 300-2 includes processes 350, 352, 354, 356 and 358. Although the above has been shown using a selected group of processes for the method 300-2, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the method 300-2 are performed by a system (e.g., the system 1000 in FIG. 10). In certain examples, some or all processes (e.g., steps) of the method 300-2 are performed by a computer and/or a processor directed by a piece of software code. In some examples, some or all processes (e.g., steps) of the method 300-2 are performed according to instructions included by a non-transitory computer-readable medium (e.g., in a computer program product, such as a computer-readable flash drive). For example, a non-transitory computer-readable medium is readable by a computer.

According to some embodiments, at process 350, the system (e.g., the system 1000 in FIG. 10) maps, by a prompt encoder, an interaction prompt associated with an image to interaction prompt tokens. In certain embodiments, the interaction prompt is indicative of a subject-subject interaction in the image.

According to some embodiments, at process 352, the system (e.g., the system 1000 in FIG. 10) determines that a first subject and a second subject in the image interact with each other. In some embodiments, the system determines the subject-subject interaction between the first subject and the second subject based on the interaction prompt of the one or more semantic prompts.

According to some embodiments, at process 354, the system (e.g., the system 1000 in FIG. 10) adds a first positional encoding to a first query token for the first subject in the image. In some embodiments, the first query token is configured to predict a subject's pose and shape.

According to some embodiments, at process 356, the system (e.g., the system 1000 in FIG. 10) adds a second positional encoding to a second query token for the second subject in the image. In some embodiments, the second query token is configured to predict a subject's position in a three-dimensional space.

According to some embodiments, at process 358, the system (e.g., the system 1000 in FIG. 10) reconstructs, by a transformer decoder, a subject-subject interaction between the first subject and the second subject. In some embodiments, the transformer decoder applies self-attention and cross-attention to each subject in the image to reconstruct each subject's pose and shape independently. In some embodiments, the transformer decoder applies cross-subject attention to reconstruct the subject-subject interaction.

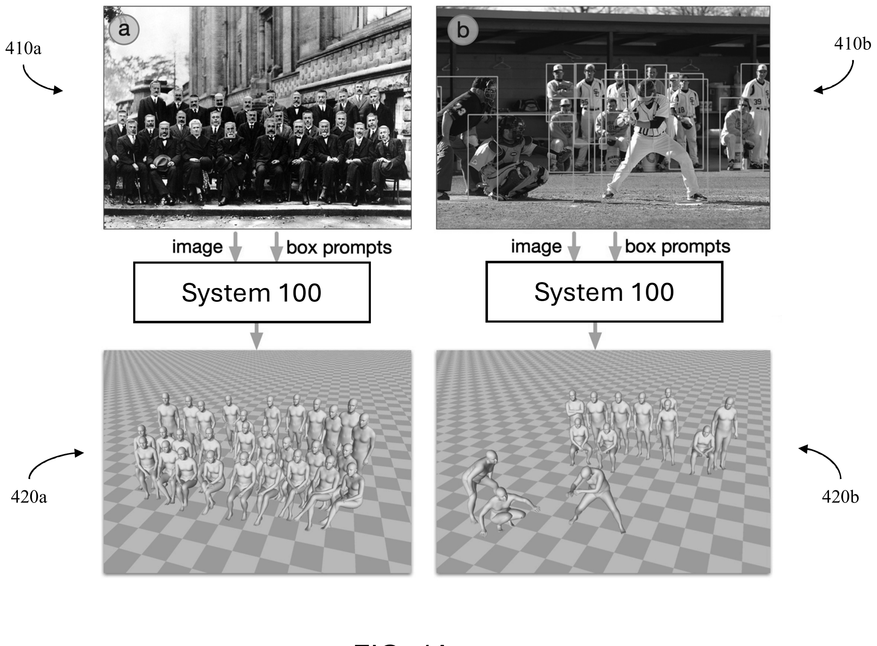

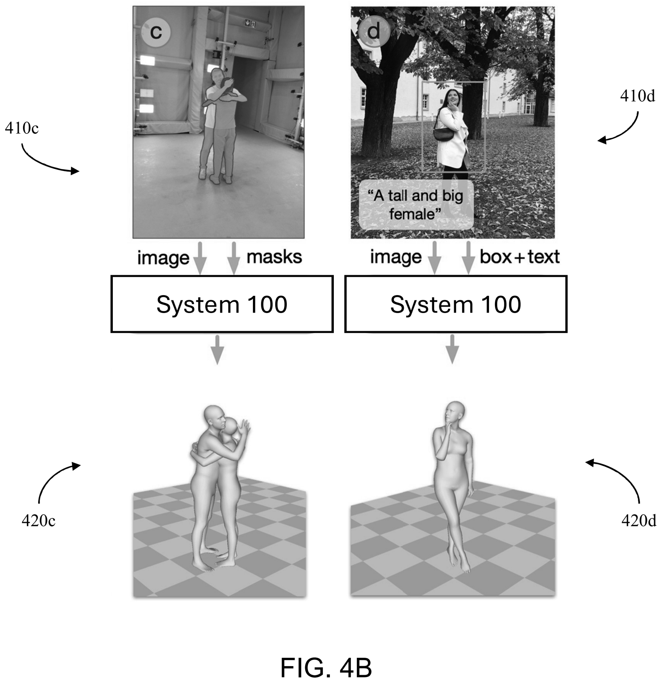

FIGS. 4A and 4B are a simplified diagram illustrating an example human pose and shape (HPS) estimation method that processes images with spatial or semantic prompts, in accordance with embodiments of the subject matter of the disclosure. For input image 410a, the system 100 generates a structured representation for the input image 410a, maps box prompts associated with human faces in the input image 410a to a plurality of prompt tokens, estimates a set of subject parameters based at least in part on the structured representation and the plurality of prompt tokens, and reconstructs the subject pose and shape in a three-dimensional space 420a based on the set of subject parameters.

For input image 410b, the system 100 generates a structured representation for the input image 410b, maps box prompts associated with human bodies in the input image 410b to a plurality of prompt tokens, estimates a set of subject parameters based at least in part on the structured representation and the plurality of prompt tokens, and reconstructs the subject pose and shape in a three-dimensional space 420b based on the set of subject parameters.

For input image 410c, the system 100 generates a structured representation for the input image 410c, maps mask prompts associated with human bodies of person-person interaction in the input image 410c to a plurality of prompt tokens, estimates a set of subject parameters based at least in part on the structured representation and the plurality of prompt tokens, and reconstructs the subject pose and shape in a three-dimensional space 420c based on the set of subject parameters.

For input image 410d, the system 100 generates a structured representation for the input image 410d, maps box prompts and text prompts associated with human bodies, faces or other characteristics in the input image 410d to a plurality of prompt tokens, estimates a set of subject parameters based at least in part on the structured representation and the plurality of prompt tokens, and reconstructs the subject pose and shape in a three-dimensional space 420d based on the set of subject parameters.

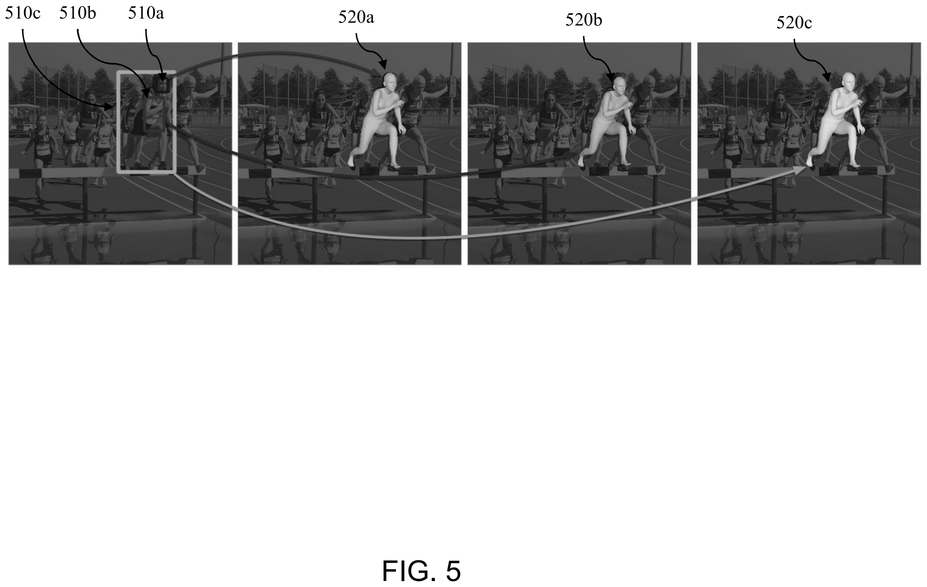

FIG. 5 is a simplified diagram illustrating an example human pose and shape (HPS) estimation method that processes images with box prompts, in accordance with embodiments of the subject matter of the disclosure. Different box prompts 510a, 510b and 510c are applied to cover a face, a body portion or a whole body of a person in the image. The system 100 can reconstruct full body HPS 520a, 520b and 520c based on the varying box prompts 510a, 510b and 510c, respectively. The system 100 remains stable when the box prompts change and uses full image context to reconstruct the human even when the boxes are truncated.

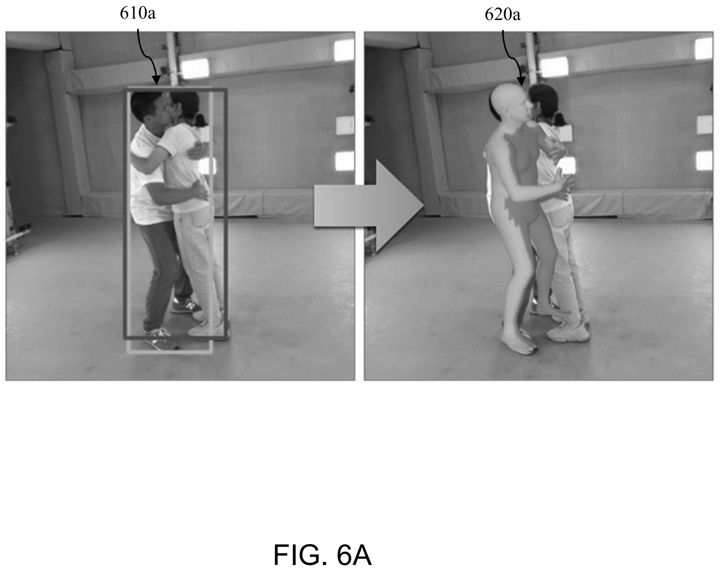

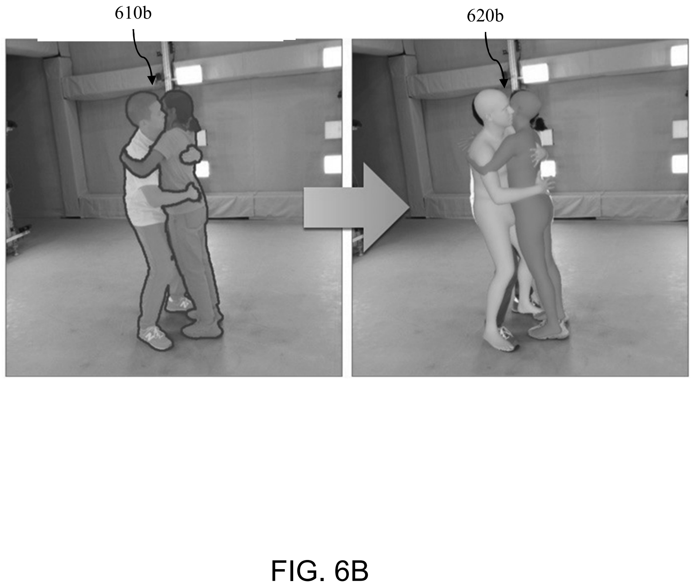

FIGS. 6A and 6B are a simplified diagram illustrating an example human pose and shape (HPS) estimation method that processes images with box prompt and/or mask prompt input, in accordance with embodiments of the subject matter of the disclosure. The reconstruction results 620a and 620b shown in FIGS. 6A and 6B are from the same model with different prompt inputs 610a and 610b. The mask prompt input 610b is better for close interaction scenarios where the box prompt input 610a may be ambiguous.

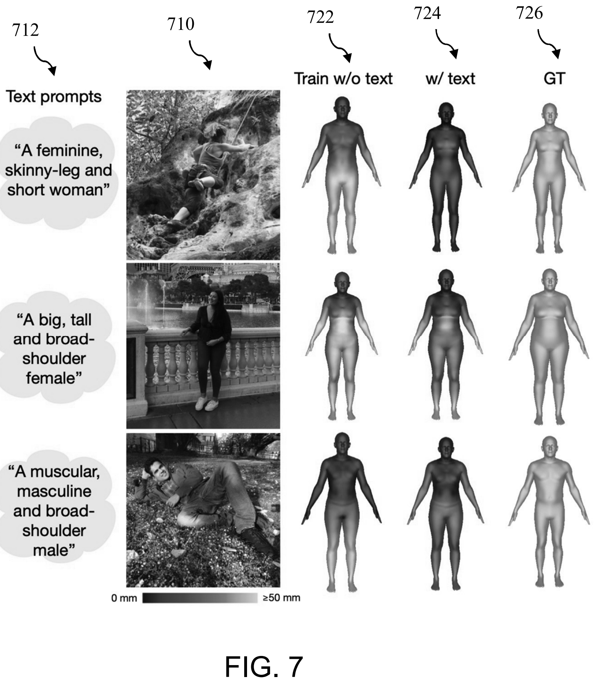

FIG. 7 is a simplified diagram illustrating an example human pose and shape (HPS) estimation method that processes images 710 with various prompt input, in accordance with embodiments of the subject matter of the disclosure. The examples in FIG. 7 illustrate effect of shape prompts 712. Compared to the baseline 722 that does not incorporate shape description of the shape prompts 712 during training and testing, the result 724 with shape prompts 712 has better accuracy (e.g., with the ground truth 726 as a reference) on the human bodies in the wild (HBW) benchmark, especially in ambiguous images, where the person's body shape is hard to figure out just from the image alone.

FIGS. 8A and 8B are a simplified diagram illustrating an example human pose and shape (HPS) estimation method to recover 3D scenes of people, in accordance with embodiments of the subject matter of the disclosure. FIGS. 8A' and 8B' are a simplified diagram illustrating a comparative human pose and shape (HPS) estimation method to recover 3D scenes of people. As shown in FIG. 8A, for input images 810 with box prompts, the systems and methods disclosed herein (e.g., the system 100, the methods 300-1 and 300-2, etc.) can recover coherent 3D scenes of people in a camera space 812 and a world space 814. As shown in FIG. 8A', for the same input images 810 with the same box prompts, existing methods recover relatively worse 3D scenes of people in a camera space 812' and a world space 814'. As shown in FIG. 8B, for input images 820 with a combination of different box prompts, the systems and methods disclosed herein (e.g., the system 100, the methods 300-1 and 300-2, etc.) can recover coherent 3D scenes of people in a camera space 822 and a world space 824. As shown in FIG. 8B', for the same input images 820 with the same combination of different box prompts, existing methods recover relatively worse 3D scenes of people in a camera space 822' and a world space 824'.

FIG. 9A is a simplified diagram illustrating an example human pose and shape (HPS) estimation method to recover two-people close interaction, in accordance with embodiments of the subject matter of the disclosure. FIG. 9B is a simplified diagram illustrating an example human pose and shape (HPS) estimation method to recover two-people close interaction, in accordance with embodiments of the subject matter of the disclosure. FIG. 9C is a simplified diagram illustrating an example human pose and shape (HPS) estimation method to recover two-people close interaction, in accordance with embodiments of the subject matter of the disclosure.

As shown in FIGS. 9A-9C, the systems and methods disclosed herein (e.g., the system 100, the methods 300-1 and 300-2, etc.) can recover coherent two-person close interaction. Despite suffering from some interpenetration, the relative positions of the interacting people in images 910, 920, 930 are accurately recovered in a camera space 912, 922, 932, and a world space 914, 924, 934.

FIG. 10 is a simplified diagram of a computing system 1000 (e.g., a server, a computing device, a computing system, etc.), with which aspects of the present disclosure may be practiced. The computing device components described below may be suitable for the computing devices described above. The computing system 1000 may include a system 1004 which may include or couple to at least one processing unit. Depending on the configuration and type of computing device, the system 1004 may include, for example, volatile storage (e.g., random access memory), non-volatile storage (e.g., read-only memory), flash memory, or any combination of such memories.

The system 1004 may include an operating system 1005, suitable for running a software application, such as one or more components supported by the systems described herein. As examples, the system 1004 may store one or more computing models to be applied by an image encoder engine or processor 1022, a prompt encoder engine or processor 1024, and a decoder engine or processor 1024. In some embodiments, the system 1004 may store one or more computing models to be applied by a mask encoder engine or processor (not shown). The operating system 1005, for example, may be suitable for controlling the operation of the computing system 1000.

According to certain embodiments, the image encoder engine or processor 1022, the prompt encoder engine or processor 1024, and/or the decoder engine or processor 1024 can implement various methods (e.g., the method 300-1 in FIG. 3A, the method 300-2 in FIG. 3B, etc.) and systems (e.g., the system 100 in FIG. 1, etc.). In some embodiments, the image encoder engine or processor 1022 can be or include the image encoder 110 in FIG. 1. In some embodiments, the prompt encoder engine or processor 1024 can be or include the prompt encoder 120 in FIG. 1. In some embodiments, the decoder engine or processor 1026 can be or include the decoder 140 in FIG. 1. In some embodiments, the mask encoder engine or processor can be or include the mask encoder 130 in FIG. 1.

A basic configuration is illustrated in FIG. 10 by those components within a dashed line 1008. The computing system 1000 may have additional features or functionality. For example, the computing system 1000 may also include additional data storage devices (removable and/or non-removable) such as, for example, magnetic disks, optical disks, or tape. Such additional storage is illustrated in FIG. 10 by a removable storage device 1009 and a non-removable storage device 1010.

As stated above, a number of programs and data files may be stored in the system 1004. While executing on a processing unit, the engines 1022 and 1024 may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, and the like.

Furthermore, aspects of the disclosure may be practiced in an electrical circuit including discrete electronic elements, packaged or integrated electronic chips containing logic gates, a circuit utilizing a microprocessor, or on a single chip containing electronic elements or microprocessors. For example, aspects of the disclosure may be practiced via a system-on-a-chip (SOC) where each or many of the components illustrated in FIG. 10 may be integrated onto a single integrated circuit. Such an SOC device may include one or more processing units, graphics units, communications units, system virtualization units and various application functionality, all of which are integrated (or "burned") onto the chip substrate as a single integrated circuit. When operating via an SOC, the functionality, described herein, with respect to the capability of the client to switch protocols, may be operated via application-specific logic integrated with other components of the computing system 1000 on the single integrated circuit (chip). Some aspects of the disclosure may also be practiced using other technologies capable of performing logical operations such as, for example, AND, OR, and NOT, including but not limited to mechanical, optical, fluidic, and quantum technologies. In addition, some aspects of the disclosure may be practiced within a general-purpose computer or in any other circuits or systems. As referred to herein, any processing can occur on a single processor or multiple processors.

The computing system 1000 may also have one or more input device(s) 1012, such as a keyboard, a mouse, a pen, a sound or voice input device, a touch or swipe input device, and the like. The output device(s) 1014, such as a display, speakers, a printer, etc. may also be included. The aforementioned devices are examples and others may be used. The computing system 1000 may include one or more communication connections 1016 allowing communications with computing units (e.g., GPUs, TPUs, etc.). Examples of suitable communication connections 1016 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system 1004, the removable storage device 1009, and the non-removable storage device 1010 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by the computing system 1000. Any such computer storage media may be part of the computing system 1000. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

According to certain embodiments, a method for estimating subject pose and shape is provided. The method includes generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

According to certain embodiments, a system includes at least one processor; and memory storing instructions that, when executed by the at least one processor, cause the system to perform a set of operations. In some examples, the set of operations includes generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

According to certain embodiments, a non-transitory computer-readable medium stores instructions. In some examples, the instructions when executed by one or more processors, cause the one or more processors to perform a set of operations including generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

In some embodiments, the first type of prompts includes one or more spatial prompts, and the second type of prompts includes one or more semantic prompts. In some embodiments, the one or more spatial prompts include a box prompt. In some embodiments, the one or more spatial prompts include a mask prompt. In some embodiments, the one or more semantic prompts include a text prompt indicative of a subject shape in the image. In some embodiments, the one or more semantic prompts include an interaction prompt indicative of a subject-subject interaction in the image.

In some embodiments, the method further includes reconstructing the subject pose and shape in a three-dimensional space based on the set of subject parameters. In some embodiments, the set of subject parameters include an orientation parameter, a subject pose parameter, a subject shape parameter, and a translation parameter.

In some embodiments, the estimating, by using a transformer-based computing model, a set of subject parameters further includes generating a person-specific prompt including a set of combined tokens by appending one or more query tokens to the plurality of prompt tokens. In some embodiments, the one or more query tokens includes a first query token configured to predict a subject's pose and shape, and a second query token configured to predict a subject's position in a three-dimensional space.

In some embodiments, the estimating, by using a transformer-based computing model, a set of subject parameters further includes determining that a first subject and a second subject in the image interact with each other based on an interaction prompt of the one or more semantic prompts; adding a first positional encoding to a first person-specific prompt associated with the first subject in the image; and adding a second positional encoding to a person-specific prompt for the second subject in the image.

In some embodiments, the image is an image frame from a video including a plurality of image frames. In some embodiments, the method further includes for each frame of the plurality of image frames, estimating a contact probability indicative of whether a given joint is in contact with a ground plane for a subject; and estimating a subject motion over time based on the set of subject parameters and the contact probability.

In some embodiments, the image encoder includes a vision transformer configured to generate a set of image embeddings as the structured representation of the image. In some embodiments, the prompt encoder includes a first transformation to map the first type of prompts to a first set of prompt tokens, and a second transformation to map the second type of prompts to a second set of prompt tokens. In some embodiments, the first set of prompt tokens includes one or more spatial prompt tokens, and the second set of prompt tokens include one or more text tokens.

In some embodiments, the transformer-based computing model includes a transformer decoder. In some embodiments, the transformer decoder applies self-attention and cross-attention to each subject in the image to reconstruct each subject's pose and shape independently. In some embodiments, the transformer decoder applies cross-subject attention to reconstruct a subject-subject interaction.

According to certain embodiments, a system includes at least one processor; and memory storing instructions that, when executed by the at least one processor, cause the system to perform a set of operations. In some examples, the set of operations includes generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

According to certain embodiments, a non-transitory computer-readable medium stores instructions. In some examples, the instructions when executed by one or more processors, cause the one or more processors to perform a set of operations including generating, by an image encoder, a structured representation for an image; mapping, by a prompt encoder, a plurality of types of prompts associated with the image to a plurality of prompt tokens; and estimating, by using a transformer-based computing model, a set of subject parameters based at least in part on the structured representation and the plurality of prompt tokens. The plurality of types of prompts includes a first type of prompts having a first modality and a second type of prompts having a second modality different from the first modality.

Various modifications and additions can be made to the exemplary embodiments discussed without departing from the scope of the present disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as they fall within the scope of the claims, together with all equivalents thereof.

**Claims**

1. A method of estimating subject pose and shape, the method comprising:

   generating, by an image encoder, a structured representation for an image;
   mapping, by a prompt encoder, a plurality of types of prompts associated with the image to a plurality of prompt tokens; and
   estimating, by using a transformer-based computing model, a set of subject parameters based at least in part on the structured representation and the plurality of prompt tokens,
   wherein the plurality of types of prompts includes a first type of prompts having a first modality and a second type of prompts having a second modality different from the first modality.

2. The method of claim 1, wherein:

   the first type of prompts includes one or more spatial prompts, and
   the second type of prompts includes one or more semantic prompts.

3. The method of claim 2, wherein the one or more spatial prompts include a box prompt.

4. The method of claim 2, wherein the one or more spatial prompts include a mask prompt.

5. The method of any of claims 2-4, wherein the one or more semantic prompts include a text prompt indicative of a subject shape in the image, and, optionally, wherein the one or more semantic prompts include an interaction prompt indicative of a subject-subject interaction in the image.

6. The method of any of the previous claims, further comprising reconstructing the subject pose and shape in a three-dimensional space based on the set of subject parameters.

7. The method of any of the previous claims, wherein the set of subject parameters include an orientation parameter, a subject pose parameter, a subject shape parameter, and a translation parameter.

8. The method of any of the previous claims, wherein the estimating, by using a transformer-based computing model, a set of subject parameters further comprises:
generating a person-specific prompt including a set of combined tokens by appending one or more query tokens to the plurality of prompt tokens, and, optionally, wherein the one or more query tokens includes a first query token configured to predict a subject's pose and shape, and a second query token configured to predict a subject's position in a three-dimensional space.

9. The method of claim 1, wherein the estimating, by using a transformer-based computing model, a set of subject parameters further comprises:

determining that a first subject and a second subject in the image interact with each other based on an interaction prompt of the one or more semantic prompts;
adding a first positional encoding to a first person-specific prompt associated with the first subject in the image; and
adding a second positional encoding to a person-specific prompt for the second subject in the image.

10. The method of any of the previous claims, wherein the image is an image frame from a video comprising a plurality of image frames, and the method further comprises:

for each frame of the plurality of image frames, estimating a contact probability indicative of whether a given joint is in contact with a ground plane for a subject; and
estimating a subject motion over time based on the set of subject parameters and the contact probability.

11. The method of any of the previous claims, wherein the image encoder includes a vision transformer configured to generate a set of image embeddings as the structured representation of the image.

12. The method of any of the previous claims, wherein the prompt encoder includes a first transformation to map the first type of prompts to a first set of prompt tokens, and a second transformation to map the second type of prompts to a second set of prompt tokens, and, optionally, wherein the first set of prompt tokens includes one or more spatial prompt tokens, and the second set of prompt tokens include one or more text tokens.

13. The method of any of the previous claims, wherein the transformer-based computing model includes a transformer decoder, and, optionally, wherein: the transformer decoder applies self-attention and cross-attention to each subject in the image to reconstruct each subject's pose and shape independently; or the transformer decoder applies cross-subject attention to reconstruct a subject-subject interaction.

14. A system for estimating subject pose and shape, the system comprising:

at least one processor; and
memory storing instructions that, when executed by the at least one processor, cause the system to perform a set of operations, the set of operations comprising:

generating, by an image encoder, a structured representation for an image;
mapping, by a prompt encoder, a plurality of types of prompts associated with the image to a plurality of prompt tokens; and
estimating, by using a transformer-based computing model, a set of subject parameters based at least in part on the structured representation and the plurality of prompt tokens,
wherein the plurality of types of prompts includes a first type of prompts having a first modality and a second type of prompts having a second modality different from the first modality.

15. A non-transitory computer-readable medium storing instructions for content deduplication, the instructions when executed by one or more processors, cause the one or more processors to perform a set of operations comprising:

generating, by an image encoder, a structured representation for an image;
mapping, by a prompt encoder, a plurality of types of prompts associated with the image to a plurality of prompt tokens; and

estimating, by using a transformer-based computing model, a set of subject parameters based at least in part on the structured representation and the plurality of prompt tokens,
wherein the plurality of types of prompts includes a first type of prompts having a first modality and a second type of prompts having a second modality different from the first modality.

FIG. 1

FIG. 2A

FIG. 2B

300-1

310 — Generate, by an image encoder, a structured representation for an image

312 — Map, by a prompt encoder, a plurality of types of prompts associated with the image to a plurality of prompt tokens

314 — Estimate, by using a transformer-based computing model, a set of subject parameters based at least in part on the structured representation and the plurality of prompt tokens

316 — Reconstruct the subject pose and shape in a three-dimensional space based on the set of subject parameters

FIG. 3A

EP 4 773 099 A1

300-2

350

Map, by a prompt encoder, an interaction prompt associated with an image to interaction prompt tokens

352

Determine that a first subject and a second subject in the image interact with each other

354

Add a first positional encoding to a first query token for the first subject in the image

356

Add a second positional encoding to a second query token for the second subject in the image

358

Reconstruct a subject-subject interaction between the first subject and the second subject

FIG. 3B

image    box prompts

System 100

image    box prompts

System 100

410a

410b

420a

420b

EP 4 773 099 A1

EP 4 773 099 A1

410c

410d

image → masks

image → box+text

"A tall and big female"

| System 100 | System 100 |

420c

420d

FIG. 4B

FIG. 5

FIG. 6A

FIG. 6B

**FIG. 7**

EP 4 773 099 A1

FIG. 8A

FIG. 8A'

FIG. 8B

FIG. 8B'

EP 4 773 099 A1

910   912   914

FIG. 9A

FIG. 9B

FIG. 9C

SYSTEM

OPERATING SYSTEM 1005

Image encoder engine 1022

Prompt encoder engine 1024

Decoder engine 1026

1004

1008

REMOVABLE STORAGE 1009

NON-REMOVABLE STORAGE 1010

INPUT DEVICE(S) 1012

OUTPUT DEVICE(S) 1014

COMMUNICATION CONNECTIONS 1016

1000

FIG. 10

**EUROPEAN SEARCH REPORT**

Europäisches
Patentamt
European
Patent Office
Office européen
des brevets

Application Number

EP 26 15 0115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BO MIAO ET AL: "Referring Human Pose and Mask Estimation in the Wild", ARXIV.ORG CORNELL UNIVERSITY LIBRARY, 201 OLIN LIBRARY CORNELL UNIVERSITY ITHACA, NY 14853, 27 October 2024 (2024-10-27), XP091919589, | 1,2,4, 7-9, 11-15 | INV. G06V10/82 G06T7/70 G06V40/10 |
| Y | * Abstract | 3,10 | |
| A | section 1 section 2.2 section 3.1 section 4.1 section 4.1 section 4.2; figure 3 * | 5,6 | |
| Y | SUN QINGPING ET AL: "AiOS: All-in-One-Stage Expressive Human Pose and Shape Estimation", 2024 IEEE/CVF CONFERENCE ON COMPUTER VISION AND PATTERN RECOGNITION (CVPR) IEEE, 16 June 2024 (2024-06-16), pages 1834-1843, XP034697480, DOI: 10.1109/CVPR52733.2024.00180 [retrieved on 2024-09-16] * section 3.4; figure 1 * | 3 | **TECHNICAL FIELDS SEARCHED (IPC)** G06V G06T |
| Y | YUFU WANG ET AL: "TRAM: Global Trajectory and Motion of 3D Humans from in-the-wild Videos", ARXIV.ORG CORNELL UNIVERSITY LIBRARY, 201 OLIN LIBRARY CORNELL UNIVERSITY ITHACA, NY 14853, 2 September 2024 (2024-09-02), XP091868161, * section 4.2; figure 1 * | 10 | |

The present search report has been drawn up for all claims

| Place of search | Date of completion of the search | Examiner |
|---|---|---|
| The Hague | 5 May 2026 | Mukasa, Oliver |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63741288